# EUROPÄISCHE PATENTSCHRIFT

(11) **EP 2 053 075 B1**
(45) Veröffentlichungstag und Bekanntmachung des Hinweises auf die Patenterteilung: **20.08.2014**
(21) Anmeldenummer: 08018449.2
(22) Anmeldetag: 22.10.2008
(51) Int. Cl.: C08L 89/00, C08L 97/02, B27N 1/00, C08H 8/00

(54) **Verfahren zur Verringerung der Emission von Aldehyden und anderen flüchtigen organischen Verbindungen aus Holzwerkstoffen und Zusammensetzungen hierfür**
Method for reducing the emission of aldehydes and other volatile organic compounds from wooden materials and compounds for same
Procédé de réduction de l'émission d'aldéhydes et d'autres liaisons organiques volatiles organiques à partir de matières dérivées du bois et compositions correspondantes

(30) Priorität: 23.10.2007 DE 102007050935
(43) Veröffentlichungstag der Anmeldung: 29.04.2009
(73) Patentinhaber: Kronotec AG, 6006 Luzern (CH)
(72) Erfinder:
(74) Vertreter: Kröncke, Rolf

(56) Entgegenhaltungen:
- EP-A- 1 291 389
- WO-A-02/059212
- WO-A-2005/099477
- WO-A-2005/113700
- WO-A-2006/132785
- DE-A1- 2 154 377
- DE-A1-102006 009 847
- NL-C2- 1 003 133
- US-A1- 2006 142 433
- US-A1- 2006 234 077
- US-B1- 6 306 997

## Beschreibung

Die vorliegende Erfindung betrifft die Verwendung von Aminogruppen enthaltenden Verbindungen in Verfahren zur Herstellung von Holzwerkstoffen aus lignocellulosehaltigen Zerkleinerungsprodukten, wobei diese Holzwerkstoffe eine verminderte Emission von flüchtigen organischen Verbindungen (VOC), und Aldehyden, insbesondere Formaldehyden aufweisen. Weiterhin betrifft die vorliegende Erfindung Verfahren zur Verminderung der Freisetzung von flüchtigen organischen Verbindungen, insbesondere Aldehyden, aus Lignocellulosen und Zerkleinerungsprodukten der Lignocellulosen, wie Holzspäne, Holzstrands, Holzfasern und Holzfurnieren und daraus hergestellten Holzwerkstoffen unter Verwendung bestimmter Additive in Holzwerkstoffen bzw. in Verfahren zur Herstellung dieser Holzwerkstoffe. Diese Additive verringern die Emission von flüchtigen organischen Verbindungen aus Lignocellulose, wie Holz, und Zerkleinerungsprodukten der Lignocellulosen, wie Holzzerkleinerungsprodukte.

### Stand der Technik

Lignocellulosen oder lignocellulosehaltige Materialien, wie Holz und Holzzerkleinerungsprodukte und daraus hergestellte Holzwerkstoffe, wie Holzwerkstoffplatten, enthalten u. a. flüchtige organische Verbindungen (VOC), wie Aldehyde, und sehr flüchtige organische Verbindungen (VVOC), wie Formaldehyd. Als flüchtige organische Verbindungen (VOC) werden alle flüchtigen organischen Stoffe subsumiert, deren Retentionszeit im Gaschromatogramm zwischen C6 (Hexan) und C16 (Hexadecan) liegt. Zu den leicht flüchtigen organischen Verbindungen gehören erfindungsgemäß unter anderem Ameisensäure und Formaldehyd. Der Ausdruck Aldehyde, wie er vorliegend verwendet wird, umfasst daher nicht nur die leichtflüchtigen Verbindungen, sondern auch alle anderen gesättigten und ungesättigten Aldehyde, insbesondere Formaldehyd.

Flüchtige organische Verbindungen und sehr flüchtige organische Verbindungen kommen in Abhängigkeit von der Art und dem Zustand der Lignocellulosen, wie der Holzart, der Lagerungsdauer, den Lagerungsbedingungen des Holzes bzw. der Zerkleinerungsprodukte der Lignocellulosen, in unterschiedlichen chemischen Zusammensetzungen und Mengen vor. Die VOCs entstammen dabei im Wesentlichen den Extraktstoffen der Lignocellulosen, z.B. des Holzes oder ihren Umwandlungsprodukten. Prominente Vertreter hiervon sind Stoffe wie alpha-Pinen, beta-Pinen, delta-3-Caren. Vor allem im Holz der Nadelbäume finden sich diese Bestandteile wieder. Umwandlungsprodukte, die in den Lignocellulosen, wie im Holz und den Zerkleinerungsprodukten der Lignocellulosen während der Lagerung und der Bearbeitung auftreten, sind z.B. Pentanal und Hexanal, aber auch Octanal, Octenal oder 1-Heptenal. Vor allem Nadelhölzer, aus denen vorwiegend mitteldichte Faserplatten (MDF) oder OSB-Platten hergestellt werden, enthalten große Mengen an Harz und Fette, die zur Bildung von flüchtigen organischen Terpenverbindungen und Aldehyden führen. Teilweise entstehen diese Stoffe auch durch Abbau der Hauptbestandteile des Holzes, wie Lignin, Zellulose und Hemizellulose. VOCs und Aldehyde, wie Formaldehyd, können auch bei der Verwendung bestimmter Klebstoffe für die Herstellung der Holzwerkstoffe entstehen.

Es ist eine allgemein bekannte Tatsache, dass alle Holzwerkstoffe einschließlich Spanplatten, Faserplatten und OSB-Platten sowohl Formaldehyd als auch VOC an die Raumluft abgeben. Wie bereits erwähnt, werden diese Emissionen sowohl durch einen chemischen Abbau innerhalb des Holzes als auch durch chemischen Abbau der verwendeten formaldehydhaltigen Klebstoffe verursacht. Bei den VOC-Emission liegen dagegen ausschließlich holzbedingte Freisetzungen vor, diese gliedern sich in sogenannte Primäremissionen von leicht flüchtigen Holzinhaltsstoffen, wie Terpenen oder chemischen Abbauprodukten, wie Essigsäure und sogenannten Sekundär- bzw. Tertiäremissionen, z.B. höhere Aldehyde, wie Pentanal oder höhere Carbonsäuren. Diese Abbauprodukte entstehen durch lang andauernde oxidative Prozesse von Holzinhaltsstoffen, wie Fettsäuren, aber auch Lignin, Cellulose und Hemicellulose.

Übliche Klebstoffe, wie sie derzeit in der Herstellung von Holzwerkstoffen, wie OSB-Platten, mitteldichte Faserplatten usw. verwendet werden, schließen Aminoplastklebstoffe, wie Harnstoff-Formaldehyd-Klebstoffe (UF-Klebstoffe), Melamin-Harnstoff-Phenol-Formaldehyd-Klebstoffe (MUPF-Klebstoffe) oder Melamin-Harnstoff-Formaldehyd-Klebstoffe (MUF-Klebstoffe) ein. Weitere Klebstoffe, wie sie typischerweise eingesetzt werden, umfassen Klebstoffe auf Basis von Diisocyanaten (PMDI), wie Klebstoffe auf Polyurethanbasis, Phenol-Formaldehyd-Klebstoffe (PF-Klebstoffe), und/oder Tannin-Formaldehyd-Klebstoffe (TF-Klebstoffe) oder Gemische hiervon. Im Faserplattenbereich finden z. B. hauptsächlich Aminoplast-Klebstoffe Verwendung. Eine Freisetzung der VOCs und des Formaldehyds finden sowohl während der Herstellung der Holzwerkstoffe als auch nach deren Herstellung oder bei ihrer Anwendung statt. Bei der Faserplattenherstellung kann es z.B. bei der thermohydrolytischen Behandlung der lignocellulosehaltigen Materialien zu einem chemischen Teilabbau des Holzes kommen. Die dabei entstehenden, leicht flüchtigen Verbindungen, wie Aldehyde und Säuren, emittieren dann während des späteren Herstellungsverfahrens oder bei späterer Nutzung der hergestellten Holzwerkstoffe. Sie können ebenfalls einen negativen Einfluss auf die Verklebungsfestigkeit haben und somit die Eigenschaften der hergestellten Holzwerkstoffe negativ beeinflussen.

Aus der DE 10 2006 009 847 A1 ist ein Verfahren zum Absorbieren von Schadstoffen und Gerüchen bekannt. Dabei sind eine proteinreaktive Substanz in der Nähe der Schadstoffemittenten vorgesehen. Als proteinreaktive Substnz werden Eiweiß-Hydrolysate beschrieben, wie enzymatisch abgebaute Skleroproteine.

Die WO 2005/099477 A2 betrifft Protein-basierte Adhesive und wasserbeständige Dispersionszusammensätzungen. Es wird unter anderem die Verwendung von Sojaproteine beschrieben. Diese Sojaproteine dienen dazu, die Beständigkeit des Klebstoffes zu verbessern.

Aus den oben genannten Gründen war es die Aufgabe der vorliegenden Erfindung unter Nutzung von Zusätzen, insbesondere von biologischen Zusätzen, die Formaldehydemission und die VOC-Emission von Holzwerkstoffen auf einniedriges Niveau zu begrenzen. Dabei sollte so wenig wie möglich in den technologischen Prozess der Holzwerkstoffherstellung eingegriffen werden, um aufwendige technologische Anpassungen oder Umbaumaßnahmen zu vermeiden. Außerdem muss eine chemische Störung des Prozesses ebenso vermieden werden. Bei Verwendung der üblichen formaldehydhaltigen Klebstoffe findet deren Aushärtung unter hohen Temperaturen und hohem Druck statt.

### Beschreibung der Erfindung

Die Aufgabe wird dadurch gelöst, dass eine spezielle Zusammensetzung den lignocellulosehaltigen Zerkleinerungsprodukten zugesetzt wird, um durch Umsetzung mit den VOCs und den Aldehyden, diese so zu verändern, dass sie nicht mehr aus den Zerkleinerungsprodukten bzw. aus den aus diesen Zerkleinerungsprodukten hergestellten Holzwerkstoffen emittieren. Die dabei entstehenden Verbindungen sind so hochmolekular, dass sie nicht mehr flüchtig sind und somit nicht mehr zu den VOC-Emissionen bzw. Aldehydemissionen beitragen.

Genauer wurde festgestellt, dass durch Umsetzung der VOCs und Aldehyde mit den erfindungsgemäßen Additiven diese VOC und Aldehyde, insbesondere Formaldehyde, zu höher molekularen Verbindungen umgesetzt werden, die nicht mehr flüchtig sind.

Erfindungsgemäß erfolgt eine Zumischung der Additive vor dem Heißverpressen der lignosehaltigen Materialien zur Ausbildung des Holzwerkstoffs. Die Umsetzung (Reaktion) der flüchtigen organischen Stoffe mit den Additiven erfolgt bei den dafür notwendigen Bedingungen, wie hohen Temperaturen, z.B. direkt in der Heißpresse. Das Additiv kann auch als Klebstoff eingesetzt werden.

Es können erfindungsgemäß auch mehrere Verbindungen des Additivs verwendet werden. Die vorliegende Erfindung umfasst daher auch Ausführungsformen, bei denen mindestens ein, zwei oder mehr Verbindungen der erfindungsgemäßen Additive verwendet werden.

Bei den erfindungsgemäß verwendbaren Additiven handelt es sich dabei um Aminogruppen enthaltende Verbindungen, wie Aminosäure(n) enthaltenden Verbindungen, wie Proteine. D.h. die Additive können reine Aminosäuren sein, teilweise abgebaute Proteine, z.B. Kollagen, aber auch proteinhaltige Klebstoffe, wie glutenhaltige Klebstoffe, insbesondere Hautleim, Knochenleim, Lederleim; milchproteinhaltige Klebstoffe, wie Kaseinklebstoffe; pflanzenproteinhaltige Klebstoffe, wie Sojaklebstoffe aber auch Mischungen dieser einzelnen Arten an Additiven, die gegebenenfalls gleichzeitig Klebstoffeigenschaften aufweisen.

Weiterhin finden erfindungsgemäß Mischungen von Reaktionsprodukten der Proteine mit konventionellen Klebstoffen Anwendung. Zu den konventionellen Klebstoffen zählen die in der vorliegenden Anmeldung genannten gängigen Klebstoffe für Holzwerkstoffe, PMDI-Klebstoffe. Dabei kann das erfindungsgemäße Additiv zur Verringerung der Emission von flüchtigen organischen Verbindungen ebenfalls als Klebstoff in Verbindung mit diesen gängigen Klebstoffen eingesetzt werden. Auch die direkte Umsetzung der Aminogruppen enthaltenen Verbindungen, insbesondere Aminosäure(n) enthaltene Verbindungen, wie Proteine mit den genannten Klebstoffen oder den monomeren Ausgangsverbindungen, wie MDI ist möglich.

Die Additive können dabei sowohl flüssig, z. B. als wässrige Dispersion, als auch in festem Zustand, z. B. als Partikel, dem Prozess zugegeben werden.

Die Additive werden dabei in einem Anteil von 0,001% bis 2,5% Feststoff bezogen auf atro Holz hinzugefügt. Natürlich können den Lignocellulosen auch andere übliche Stoffe hinzugefügt werden. Zum Beispiel werden konventionelle Klebstoffe in einem Bereich von 3% bis 12% Feststoff bezogen auf atro Holz hinzugefügt.

Die Additive wirken dabei als eine Art Fängermolekül für die flüchtigen organischen Verbindungen und das Formaldehyd und bilden nach Umsetzung mit den flüchtigen organischen Verbindungen oder dem Formaldehyd Verbindungen mit einem höheren Molekulargewicht aus, die nicht mehr oder nur sehr gering aus den Lignocellulosen, wie den Holzwerkstoffen, austreten. Diese durch Umsetzung der VOC mit dem Additiv entstandenen Verbindungen sind weiter in ihren toxikologischen Wirkungen auf Lebewesen eingeschränkt.

Das Vermischen mit dem Additiv, das bevorzugt zusammen mit dem Vermischen mit dem Klebstoff erfolgt, kann vor oder nach Lagerung der Lignocellulosen oder der Zerkleinerungsprodukte hiervon erfolgen.

Bei den Lignocellulosen, wie den Holz, oder Zerkleinerungsprodukten hiervon, kann es sich dabei sowohl um Nadelhölzer als auch um Laubhölzer handeln. Auch Mischungen dieser beiden Holzarten sind möglich. Bevorzugt stammen die Holzspäne, Strands oder Holzfasern von Nadelhölzern.

Die unter erfindungsgemäßer Verwendung herstellbaren Holzwerkstoffe können gemäß bekannten Verfahren hergestellt werden.

Das Verfahren kann zusätzlich auch andere, dem Fachmann bekannte Verfahren zur Verminderung der Emission von flüchtigen organischen Verbindungen oder leicht flüchtigen organischen Verbindungen umfassen.

Während des Herstellungsverfahrens, z. B. im Zuge der thermolytischen Behandlung von Fasern im Refiner entstehen durch teilweise Zersetzung der Lignocellulosen, insbesondere der Hemizellulose des Holzes, flüchtige Verbindungen. In einer weiteren vorteilhaften Ausführungsform betrifft die vorliegende Erfindung daher ein Verfahren, bei dem das Additiv nach dem Refiner den Fasern beigemischt werden. Dies kann z. B. zusammen mit Einblasen des Klebstoffes geschehen. Die Zugabe des Additivs kann auch vor dem Refiner-Schritt erfolgen.

Es wurde nun überraschend gefunden, dass die Zugabe der erfindungsgemäβen Additive die Emission von gesättigten und ungesättigten Aldehyden, einschließlich Formaldehyd, und flüchtigen organischen Verbindungen aus den lignozellulosehaltigen Materialien herabsetzt, sowohl während des Herstellungsprozesses als auch nach Herstellung des Holzwerkstoffes. Diese Reduktion der Emission von flüchtigen organischen Verbindungen hält nach Herstellung der Holzwerkstoffe und bei der Verwendung der Holzwerkstoffe an. Bei den Holzwerkstoffen kann es sich bevorzugt um Spanplatten aus Holzspänen, OSB-Strands aus Holzstrands, Sperrholzplatten aus Holzfunier und Holzfaserplatten, insbesondere MDF-Platten, aus Holzfasern sowie HDF-Platten handeln.

Unter Lignocellulosen werden lignocellulosehaltige Materialien, wie Holz verstanden. Daraus erhaltene Zerkleinerungsprodukte von Lignocellulosen umfassen insbesondere Holzstrands, Holzspäne oder Holzfasern.

Die vorliegende Erfindung beschreibt die Verwendung von Zusammensetzungen, die im Folgenden auch als Fängerlösung bezeichnet wird, zur Behandlung von Holzwerkstoffen und zur Reduktion der Emission von gesättigen und ungesättigten Aldehyden, insbesondere Formaldehyd, und flüchtigen organischen Verbindungen umfassend mindestens ein Additiv, wobei die Additive Verbindungen mit Aminogruppen enthaltenen Verbindungen, insbesondere Aminosäure(n) enthaltene Verbindungen und Proteine sind. Bevorzugte Formen dieser Zusammensetzungen sind solche, die die o.g. bevorzugten Additive enthalten.

Die Additive können dabei gemäß bekannten Verfahren zu den Lignocellulosen oder deren Zerkleinerungsprodukten appliziert werden. Die Fängerlösung kann bei der Herstellung aller Holzwerkstoffe zum Einsatz kommen, wobei die Zugabe gemäß dem beschriebenen Verfahren zweckmäßigerweise über betriebsübliche Anlagen zur Bindemitteldosierung, wie Beleimtrommel, Blow-Line-Beleimung, Trockenbeleimung oder direkt zum Klebstoff kurz vor der Beleimung, als in der Leimküche, erfolgt. Weiterhin ist erfindungsgemäß die Zugabe der Lösung zur Matte über Düsen direkt vor der Heißpresse möglich, aufgrund einer schlechteren Verteilung aber nicht bevorzugt.

Nach Applikation hat eine Behandlung zu erfolgen, derart, dass dem System ausreichend Energie, z.B. durch Wärme, zugeführt wird, dass eine Umsetzung der VOC mit den Additiven erfolgt. Diese Behandlung kann z.B. das Heißverpressen der Zerkleinerungsprodukte sein.

Schließlich werden Holzwerkstoffe erhältlich gemäß erfindungsgemäßer Verwendung der Additive beschrieben. Diese Holzwerkstoffe zeichnen sich durch eine verringerte Emission an Aldehyden und flüchtigen organischen Verbindungen einschließlich Formaldehyd aus.

Die folgenden Beispiele sollen die Erfindung weiter beschreiben ohne sie einzuschränken.

### Beispiel 1

### Herstellung von emissionsarmen OSB

Die emissionsarme OSB-Platte und die Referenzprobe ohne Additiv wurden aus identischen Strandmaterial (100% Kiefer) unter identischen Produktionsbedingungen hergestellt. Die Herstellungsparameter waren: Einschichtige, von Hand gestreute OSB, Presstemperatur 220°C, Pressfaktor 12 s/mm, 200 bar Pressdruck. Die Herstellung der Platten erfolgte unter Verwendung von 5% PMDI (auf atro Strand) als Klebstoff. Der emissionsarmen OSB wurden zusätzlich 1 % Weizenprotein zugegeben, das vor der Applikation im PMDI-Klebstoff dispergiert wurde.

### Beispiel 2

### Bestimmung der Emission aus OSB

Die in Beispiel 1 hergestellten OSB-Platten wurden gemäß den folgenden Verfahren auf ihr Emissionsverhalten untersucht:

Die Proben OSB-K1 und K2 wurden in Prüfkammern (Volumen: V= 23,5 L) eingebracht. Die Prüfkammern wurden mit 3,1 Luftwechseln pro Stunde betrieben. Daraus resultiert eine flächenspezifische Luftdurchflussrate q = 1 m³m⁻²h⁻¹. In Anlehnung an die Vorgaben aller gängigen VOC-Prüfschemata verbleiben die Proben 28 Tage in den Prüfkammern mit normgerechtem Klima (23 °C und 50 % r.Lf.). Die Luftprobenahmen wurden auf Tenax TA durchgeführt mit Probenahmevolumina von 1 bis 2 L.

Die Quantifizierung erfolgt über eine lineare Mehrpunktkalibrierung der entsprechenden Referenzsubstanzen sowie dem relativen Responsefaktor des internen Standards (Toluo1_{d8}). Verbindungen, für die kein entsprechender Standard verfügbar war, wurden substanzähnlich quantifiziert (vgl. Tabelle 2). Im Folgenden sind verwendete Geräte und Parameter dargestellt:

**Tabelle 1: Verwendetes GC/MS-System**

| | |
|---|---|
| Thermodesorptionseinheit | TDS 3, Fa. Gerstel, Mühlheim a. d. Ruhr |
| Gaschromatograph | Agilent 6895 |
| Trägergas | Helium |
| Säule | Zebron ZB1701, 30m, 0,25 mm, 025 µm 14 % Cyanopropylphenyl-methylpolysiloxan |
| KühlfalleKAS, | Glass Liner, gefüllt mit Tenax TA |
| Detektor | Agilent 5973N 29-400 amu; 3,8 scans s⁻¹ |

| **Thermodesorption** | |
|---|---|
| Starttemperatur | 20 °C |
| Endtemperatur | 280 °C |
| Aufheizrate | 60 °C s⁻¹ |
| Hold | 4 min |

| **Kühlfalle** | |
|---|---|
| Starttemperatur | -30 °C |
| Endtemperatur | 280 °C |
| Aufheizrate | 12 °C s⁻¹ |
| Hold | 3 min |
| Split-Verhältnis | 1:20 |

| **Ofenprogramm** | |
|---|---|
| 40 °C, 4 min. halten | |
| 6 °C min⁻¹ bis 90 °C, 4min: halten | |
| 8 °C min⁻¹ bis 200 °C | |
| 12 °C min⁻¹ bis 280 °c; 5 min: halten | |
| Säulenfluss 1,2 ml min.⁻¹ | |

**Tabelle 2: Standards zur Quantifizierung von Nebenkomponenten**

| Verbindung | Standard |
|---|---|
| Terpene | α *- Pinen* , Toluol |
| Aldehyde | Pentanal, Nonanal |
| Ungesättigte Aldehyde | 1-Heptenal |
| Alkohole | 1-Pentanol |
| Sonstige Verbindungen | Toluol (IS) |

Die in der Tabelle 3 (Referenzprobe, OSB K1) und der Tabelle 4 (OSB mit 1% Weizenprotein, OSB K2) dargestellten Ergebnisse zeigen, dass bei den erfindungsgemäß hergestellten OSB-Platten die Emissionswerte für gesättigte Aldehyde gering sind. Die Emissionsverhalten für Terpene und für VOC insgesamt waren ebenfalls befriedigend.

**Tabelle 3: Einzel- und Summenwerte der Probe OSB K1**

| | ausschließlich | C | C | C | C | C | NIK | Ri | ohne |
|---|---|---|---|---|---|---|---|---|---|
| **OSB K1** | C ≥ 3 µ g/m³ | 3 Tage | 7 Tage | 14 Tage | 21 Tage | 28 Tage | | | NIK |
| | Probevolumen | 1 L | 1 L | 2 L | 2 L | 2 L | | | |
| | | µg/m³ | µg/m³ | µg/m³ | µg/m³ | µg/m³ | µg/m³ | - | µg/m³ |
| | Tricyclen | n.b | n.b. | n.b. | n.b. | n.b. | 1400 | 0,0000 | |
| | Thujen | 6,7 | n.b. | n.b. | n.b. | n.b. | 1400 | 0,0000 | |
| | a-Pinen | 1072,3 | 388,7 | 183,1 | 124,7 | 109,1 | 1400 | 0,0779 | |
| | Camphen | 10,4 | 3,2 | n.b. | n.b. | n.b. | 1400 | 0,0000 | |
| | b-Pinen | 190,8 | 54,0 | 21,3 | 13,3 | 11,4 | 1400 | 0,0081 | |
| Terpene | Myrcen | 13,4 | 6,2 | n.b. | n.b. | n.b. | 1400 | 0,0000 | |
| | 3-Caren | 947,1 | 355,6 | 160,4 | 97,6 | 88,9 | 1400 | 0,0635 | |
| | Limonen | 24,0 | 13,0 | 6,6 | 4,1 | 3,5 | 1400 | 0,0025 | |
| | Phellandren | 7,0 | n.b. | n.b. | n.b. | n.b. | 1400 | 0,0000 | |
| | Terpinen | n.b. | n.b. | n.b. | n.b. | n.b. | 1400 | 0,0000 | |
| | Terpinolen | 6,2 | 3,6 | n.b. | n.b. | n.b. | 1400 | 0,0000 | |
| *Summe* | | 2277,9 | 824,2 | 371,4 | 239,7 | 212,8 | | | |
| | Pentanal | 7,3 | 14,8 | 25,2 | 21,1 | 23,5 | 1700 | 0,0138 | |
| | Hexanal | 76,6 | 157,8 | 184,5 | 139,5 | 148,3 | 890 | 0,1666 | |
| ges. Aldehyde | Heptanal | n.b. | n.b. | n.b. | n.b. | 3,6 | 1000 | 0,0036 | |
| | Octanal | n.b. | n.b. | 3,9 | 4,8 | 6,4 | 1100 | 0,0058 | |
| | Nonanal | n.b. | n.b. | n.b. | n.b. | 4,2 | 1300 | 0,0032 | |
| *Summe* | | 83,9 | 172,5 | 213,5 | 165,4 | 185,9 | | | |
| | 2-Heptenal | n.b. | n.b. | n.b. | n.b. | 3,7 | 16 | 0,2306 | |
| unges. Aldehyde | | | | | | | | | |
| | 2-Octenal | n.b. | n.b. | 5,5 | 5,1 | 8,2 | 18 | 0,4550 | |
| *Summe* | | 0,0 | 0,0 | 5,5 | 5,1 | 11,9 | | | |
| | Furfural | n.b. | n.b. | n.b. | n.b. | n.b. | 20 | 0,0000 | |
| Andere Aldehyde | | | | | | | | | |
| | Benzaldehyd | n.b. | n.b. | 4,1 | 4,3 | 5,0 | 90 | 0,0550 | |
| *Summe* | | 0,0 | 0,0 | 4,1 | 4,3 | 5,0 | | | |
| | Essigsäure | n.b. | n.b. | n.b. | n.b. | 47,4 | 500 | 0,0948 | |
| org. Säuren | | | | | | | | | |
| | n-Hexansäure | n.b. | n.b. | n.b. | n.b. | 4,2 | 490 | 0,0086 | |
| *Summe* | | 0,0 | 0,0 | 0,0 | 0,0 | 51,6 | | | |
| **aliphat. Alkohole** | **1-Pentanol** | **n.b.** | **n.b.** | **4,1** | **4,1** | **n.b.** | **3600** | **0,0000** | |
| | Toluol | n.b. | n.b. | n.b. | n.b. | n.b. | 1900 | 0,0000 | |
| aromat. Kohlen- | p-Cymol | 14,9 | 6,9 | 4,4 | n.b. | n.b. | 1100 | 0,0000 | |
| wasserstoffe | m-Cymol | n.b. | n.b. | n.b. | n.b. | n.b. | 1100 | 0,0000 | |
| | p-Cymol | 23,0 | 10,7 | 6,2 | 3,7 | n.b. | 1100 | 0,0000 | |
| *Summe* | | 37,9 | 17,6 | 10,6 | 3,7 | 0,0 | | | |
| **Gesamtsumme** | | **2399,7** | **1014,3** | **609,2** | **422,2** | **467,2** | | **1,2** | **0,0** |

**Tabelle 4: Einzel- und Summenwerte der Probe OSB K2**

| | ausschließlich | C | C | C | C | C | NIK | Ri | ohne |
|---|---|---|---|---|---|---|---|---|---|
| **OSB K2** | C ≥ 3 µ g/m³ | 3 Tage | 7 Tage | 14 Tage | 21 Tage | 28 Tage | | | NIK |
| | Probevolumen | 1 L | 1 L | 2 L | 2 L | 2 L | | | |
| | | µg/m³ | µg/m³ | µg/m³ | µg/m³ | µg/m³ | µg/m³ | - | µg/m³ |
| | Tricyclen | 3,1 | n.b. | n.b. | n.b. | n.b. | 1400 | 0,0000 | |
| | Thujen | 7,8 | n.b. | n.b. | n.b. | n.b. | 1400 | 0,0000 | |
| | a-Pinen | 1243,5 | 481,8 | 220,3 | 123,9 | 118,6 | 1400 | 0,0847 | |
| | Camphen | 10,9 | 3,9 | n.b. | n.b. | n.b. | 1400 | 0,0000 | |
| | b-Pinen | 219,2 | 74,9 | 27,7 | 14,4 | 13,4 | 1400 | 0,0096 | |
| Terpene | Myrcen | 14,0 | 7,4 | 3,6 | n.b. | n.b. | 1400 | 0,0000 | |
| | 3-Caren | 1017,7 | 422,9 | 184,2 | 101,4 | 91,8 | 1400 | 0,0656 | |
| | Limonen | 18,4 | 10,7 | 5,4 | 3,1 | n.b. | 1400 | 0,0000 | |
| | Phellandren | 7,8 | n.b. | n.b. | n.b. | n.b. | 1400 | 0,0000 | |
| | Terpinen | n.b. | n.b. | n.b. | n.b. | n.b. | 1400 | 0,0000 | |
| | Terpinolen | 6,1 | n.b. | n.b. | n.b. | n.b. | 1400 | 0,0000 | |
| *Summe* | | 2548,5 | 1001,5 | 441,1 | 243,8 | 223,8 | | | |
| | Pentanal | 4,8 | 8,5 | 17,3 | 13,8 | 15,8 | 1700 | 0,0093 | |
| | Hexanal | 46,8 | 99,7 | 128,1 | 101,5 | 108,0 | 890 | 0,1213 | |
| ges. Aldehyde | Heptanal | n.b. | n.b. | n.b. | n.b. | n.b. | 1000 | 0,0000 | |
| | Octanal | n.b. | n.b. | n.b. | n.b. | 3,9 | 1100 | 0,0035 | |
| | Nonanal | n.b. | n.b. | n.b. | n.b. | 4,2 | 1300 | 0,0000 | |
| *Summe* | | 51,6 | 108,2 | 145,5 | 115,2 | 127,6 | | | |
| | 2-Heptenal | n.b. | n.b. | n.b. | n.b. | n.b. | 16 | 0,0000 | |
| unges. Aldehyde | | | | | | | | | |
| | 2-Octenal | n.b. | n.b. | n.b. | n.b. | 4,0 | 18 | 0,2194 | |
| *Summe* | | 0,0 | 0,0 | 0,0 | 0,0 | 4,0 | | | |
| | Furfural | n.b. | n.b. | n.b. | n.b. | n.b. | 20 | 0,0000 | |
| Andere Aldehyde | | | | | | | | | |
| | Benzaldehyd | n.b. | n.b. | n.b. | n.b. | 3,2 | 90 | 0,0357 | |
| *Summe* | | 0,0 | 0,0 | 0,0 | 0,0 | 3,2 | | | |
| | Essigsäure | n.b. | n.b. | n.b. | n.b. | 27,5 | 500 | 0,0551 | |
| org. Säuren | | | | | | | | | |
| | n-Hexansäure | n.b. | n.b. | n.b. | n.b. | n.b. | 490 | 0,0000 | |
| *Summe* | | 0,0 | 0,0 | 0,0 | 0,0 | 27,5 | | | |
| **aliphat. Alkohole** | **1-Pentanol** | | | | | **3600** | | **0,0000** | |
| | Toluol | 3,3. | n.b. | n.b. | n.b. | n.b. | 1900 | 0,0000 | |
| aromat. Kohlen- | p-Cymol | 15,1 | 8,6 | 5,3 | n.b. | n.b. | 1100 | 0,0000 | |
| wasserstoffe | m-Cymol | n.b. | n.b. | n.b. | n.b. | n.b. | 1100 | 0,0000 | |
| | p-Cymol | 21,0 | 11,5 | 7,0 | 4,2 | 3,4 | 1100 | 0,0031 | |
| *Summe* | | 39,4 | 20,1 | 12,2 | 4,2 | 3,4 | | | |
| **Gesamtsumme** | | **2639,4** | **1129,8** | **598,8** | **363,2** | **389,6** | | **0,6** | **0,0** |

Wie aus den Beispielen deutlich wird, ist es erfindungsgemäß möglich, die Aldehydemissionen deutlich mit Hilfe der erfindungsgemäßen Zusammensetzung zu verringern. Die so erhaltenen Holzwerkstoffe zeichnen sich im späteren Gebrauch durch verringerte Aldehyd- und geringe VOC-Emissionen aus.

## Patentansprüche

1. Verwendung von Aminogruppen enthaltenden Verbindungen zur Verminderung der Emission von flüchtigen organischen Verbindungen aus Holzwerkstoffen, wobei die Holzwerkstoffe aus Lignocellulose-haltigen Zerkleinerungsprodukten mit Klebstoff auf Basis von Isozyanaten (PMDI) unter Wärmebehandlung verpresst werden, und wobei bei der Herstellung der Holzwerkstoffe den Zerkleinerungsprodukten vor dem Verpressen diese Aminogruppen enthaltenden Verbindungen als Additiv zugesetzt werden, **dadurch gekennzeichnet, dass** die Menge an zugegebenem Aminogruppen enthaltenden Verbindungen zwischen 0,01 % und 2,5% Feststoff bezogen auf atro Lignocellulose liegt.

2. Verwendung gemäß Anspruch 1, **dadurch gekennzeichnet, dass** das Additiv ausgewählt ist aus einem glutenhaltigen Klebstoff, einem milchproteinhaltigen Klebstoff, einem pflanzenproteinhaltigen Klebstoff oder Derivate dieser Klebstoffe.

3. Verwendung nach Anspruch 1 oder 2, **dadurch gekennzeichnet, dass** die Holzwerkstoffe solche sind, hergestellt aus Holzspäne, Holzstrands, Holzfasern und Holzfurnieren.

4. Verwendung nach einem der vorherigen Ansprüche, wobei die Holzwerkstoffe i) Holzplatten sind, oder ii) Sperrholzplatten aus Holzfurnier.

5. Verwendung gemäß einem der vorherigen Ansprüche, **dadurch gekennzeichnet, dass** die Aminogruppen enthaltenden Verbindungen gemeinsam mit dem Klebstoff zu den Zerkleinerungsprodukten der Lignocellulosen zugegeben wird.

6. Verwendung gemäß einem der vorherigen Ansprüche, **dadurch gekennzeichnet, dass** die hergestellten Holzwerkstücke zu Formteilen weiterverarbeitet werden.

7. Verwendung gemäß einem der vorherigen Ansprüche, **dadurch gekennzeichnet, dass** ein Vermischen der Aminogruppen enthaltenden Verbindungen mit den Zerkleinerungsprodukten der Lignocellulosen nach einer ersten Trocknung der Lignocellulosen erfolgt.

8. Verwendung gemäß einem der vorherigen Ansprüche, **dadurch gekennzeichnet, dass** die Aminogruppen enthaltenden Verbindungen Aminosäure(n) enthaltende Verbindungen und Proteine sind.

9. Verwendung gemäß Anspruch 4, wobei die Holzplatten Spanplatten, Faserplatten und OSB-Platten sind.

## Claims

1. Use of amino-containing compounds for reducing the emission of volatile organic compounds from wood-base materials wherein the wood-base materials are produced from lignocellulosic comminution products with adhesive based on isocyanates (PMDI) by compression moulding under thermal treatment, and wherein these amino-containing compounds are added as an additive to the comminution products prior to the compression moulding to produce the wood-base materials, **characterized in that** the amount of amino-containing compounds added is between 0.01% and 2.5% of solids based on absolutely dry lignocellulose.

2. Use according to Claim 1, **characterized in that** the additive is selected from an adhesive comprising gluten, an adhesive comprising lactoprotein, an adhesive comprising phytoprotein or derivatives thereof.

3. Use according to Claim 1 or 2, **characterized in that** the wood-base materials are produced from wood flakes, wood strands, wood fibres and wood veneers.

4. Use according to any preceding claim, wherein the wood-base materials are i) wood panels, or are ii) plywood panels from wood-veneer.

5. Use according to any preceding claim, **characterized in that** the amino-containing compounds are added to the comminution products of lignocelluloses conjointly with the adhesive.

6. Use according to any preceding claim, **characterized in that** the wood-base pieces obtained are further processed into shaped articles.

7. Use according to any preceding claim, **characterized in that** the amino-containing compounds are mixed with the comminution products of lignocelluloses after a first drying of the lignocelluloses.

8. Use according to any preceding claim, **characterized in that** the amino-containing compounds are proteins and compounds comprising amino acid(s) .

9. Use according to Claim 4, wherein the wood panels are flakeboard panels, fibreboard panels and OSB panels.

## Revendications

1. Utilisation de composés contenant des groupes amino pour réduire l'émission de composés organiques volatils à partir de matériaux à base de bois, les matériaux à base de bois étant comprimés à partir de produits de broyage contenant de la lignocellulose avec un adhésif à base d'isocyanates (PMDI) sous traitement thermique, et ces composés contenant des groupes amino étant ajoutés en tant qu'additif aux produits de broyage lors de la fabrication des matériaux à base de bois avant la compression, **caractérisée en ce que** la quantité de composés contenant des groupes amino ajoutés est comprise entre 0,01 % et 2,5 % de solides par rapport à la lignocellulose anhydre.

2. Utilisation selon la revendication 1, **caractérisée en ce que** l'additif est choisi parmi un adhésif contenant du gluten, un adhésif contenant des protéines lactiques, un adhésif contenant des protéines végétales ou des dérivés de ces adhésifs.

3. Utilisation selon la revendication 1 ou 2, **caractérisée en ce que** les matériaux à base de bois sont des matériaux fabriqués à partir de particules de bois, de copeaux longs de bois, de fibres de bois et de placages de bois.

4. Utilisation selon l'une quelconque des revendications précédentes, **caractérisée en ce que** les matériaux à base de bois sont i) des panneaux de bois ou ii) des panneaux de contreplaqué à base de placages de bois.

5. Utilisation selon l'une quelconque des revendications précédentes, **caractérisée en ce que** les composés contenant des groupes amino sont ajoutés conjointement avec l'adhésif aux produits de broyage des lignocelluloses.

6. Utilisation selon l'une quelconque des revendications précédentes, **caractérisée en ce que** les morceaux de matériau à base de bois fabriqués sont transformés en pièces moulées.

7. Utilisation selon l'une quelconque des revendications précédentes, **caractérisée en ce qu'**un mélange des composés contenant des groupes amino avec les produits de broyage des lignocelluloses a lieu après un premier séchage des lignocelluloses.

8. Utilisation selon l'une quelconque des revendications précédentes, **caractérisée en ce que** les composés contenant des groupes amino sont des composés contenant un ou plusieurs acides aminés et des protéines.

9. Utilisation selon la revendication 4, dans laquelle les panneaux de bois sont des panneaux de particules, des panneaux de fibres et des panneaux OSB.
